# EUROPEAN PATENT APPLICATION

(11) **EP 4 420 795 A1**
(43) Date of publication of application: **28.08.2024**
(21) Application number: 24152961.9
(22) Date of filing: 19.01.2024
(51) Int. Cl.: B05C 5/02, B05C 9/04, B05C 9/06, H01M 4/04, B05C 13/00

(54) **DEVICE AND PROCESS FOR COATING AN ELECTRODE**

(30) Priority: 19.01.2023 CN 202310078653
(71) Applicant: NORDSON CORPORATION, Westlake, OH 44145-1119 (US)
(72) Inventor: Qiu, Peter, Westlake, OH 44145 (US); Ren, Neil, Westlake, OH 44145 (US); Jiang, Kevin, Westlake, OH 44145 (US); Hu, Andrew, Westlake, OH 44145 (US); Chen, Lock, Westlake, OH 44145 (US); Shao, Mikky, Westlake, OH 44145 (US); Yi, Charles, Westlake, OH 44145 (US)
(74) Representative: Eisenführ Speiser

(57) **Abstract**

A coating device includes at least one applicator configured to coat a glue onto two opposite sides of an electrode sheet; at least one roller assembly configured to guide the electrode sheet past the at least one applicator; and at least one support bar arranged under the at least one applicator.

## Description

### TECHNICAL FIELD

The disclosure is directed to a device and process for coating an electrode. In aspects, the disclosure is directed to a device and process for coating an electrode with adhesive. In aspects, the disclosure is directed to a device and process for coating both sides of an electrode with adhesive. The disclosure is further directed to a device and process for coating an Electric Vehicle (EV) battery electrode. In aspects, the disclosure is directed to a device and process for coating an EV battery electrode with adhesive. In aspects, the disclosure is directed to a device and process for coating both sides of an EV battery electrode with adhesive.

### BACKGROUND

Precise and accurate construction and manufacturing of electrical components that include electrodes is of great importance in a number of areas including batteries. More specifically, to ensure that batteries provide reliable operation and high performance, the associated electrical components implementing electrodes need to be constructed with a high degree of precision. Additionally, it is important that the associated manufacturing of these electrical components may be implemented in a fast manner to ensure timely production.

In particular, Electric Vehicle (EV) batteries include electrical components that need to be coated with adhesive material, such as bonding tape, on some surfaces. Moreover, the adhesive material needs to be applied uniformly on the electrical components to ensure reliable operation and high-performance of the associated Electric Vehicle (EV) batteries.

More specifically, the electrical components may include electrode sheets that are a component of the Electric Vehicle (EV) batteries. However, current devices and processes fail to achieve a uniform application of adhesive material within the constraints of a desired manufacturing time, fail to achieve a desired reliability, fail to achieve a desired performance, and/or the like.

Accordingly, there is a need for improvements in devices and processes for coating electrodes.

### SUMMARY OF THE DISCLOSURE

In one general aspect, a coating device includes at least one applicator configured to coat a glue onto two opposite sides of an electrode sheet. The coating device in addition includes at least one roller assembly configured to guide the electrode sheet past the at least one applicator. The coating device moreover includes at least one support bar arranged under the at least one applicator.

In one general aspect, a process includes coating a glue onto two opposite sides of an electrode sheet with at least one applicator. The process in addition includes guiding the electrode sheet past the at least one applicator with at least one roller assembly. The process moreover includes arranging at least one support bar under the at least one applicator.

There has thus been outlined, rather broadly, certain aspects of the disclosure in order that the detailed description thereof herein may be better understood, and in order that the present contribution to the art may be better appreciated. There are, of course, additional aspects of the disclosure that will be described below and which will form the subject matter of the claims appended hereto.

In this respect, before explaining at least one aspect of the disclosure in detail, it is to be understood that the disclosure is not limited in its application to the details of construction and to the arrangements of the components set forth in the following description or illustrated in the drawings. The disclosure is capable of aspects in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the disclosure. It is important, therefore, that the claims be regarded as including such equivalent constructions insofar as they do not depart from the spirit and scope of the disclosure.

### BRIEF DESCRIPTION OF THE DRAWINGS

Figure 1 illustrates a schematic of a coating device according to aspects of the disclosure.
Figure 2 illustrates a partial schematic of the coating device according to Figure 1.
Figure 3 illustrates a partial schematic of the coating device according to Figure 1.
Figure 4 illustrates a left side perspective of an exemplary implementation of the coating device according to Figure 1.
Figure 5 illustrates a right side perspective of the exemplary implementation of the coating device according to Figure 4.
Figure 6 illustrates the coating device implementing a controller and aspects of the disclosure.
Figure 7 illustrates the coating device implementing a controller and aspects of the disclosure.
Figure 8 illustrates an exemplary process for process of implementing a coating device according to the disclosure.

### DETAILED DESCRIPTION

The disclosure will now be described with reference to the drawing figures, in which like reference numerals refer to like parts throughout.

Aspects of the disclosure may include a device and process that may be implemented in conjunction with and/or implemented in a slitting machine for EV battery anode and cathode electrode manufacturing. Moreover, the disclosed device and process are configured for high line speed application of adhesive material to the EV battery anode and cathode electrode. For example, a high line speed application of adhesive material to the EV battery anode and cathode electrode up to and greater than 100 m/min.

In this regard, the high line speed application of adhesive material to the EV battery anode and cathode electrode may replace and/or be a substitute for the typical tape bonding process and/or glue film. The equivalent bonding tape or glue film width ranges from 4 mm to 12 mm. In this regard, the disclosed device and process are configured for forming, for example, a 7 mm glue width material application to one or more of the electrodes.

Further, the disclosed device and process are configured for forming an accurate and reliable glue thickness. In this regard, to ensure electrode laser cut off effectiveness, intrinsic battery characteristics, and/or the like the disclosed device and process are configured for forming an accurate and reliable glue thickness of, for example, 10-20 µm. More specifically, the disclosed device and process ensure that the glue thickness is within a desired range, a specified range, a critical specified range, and/or the like.

Further, the disclosed device and process are configured for forming an accurate and reliable glue pattern quality. In particular, the electrode substrate must be applied glue in a consistently and uniformly with a desired pattern. Moreover, the disclosed device and process are configured to ensure no glue is missing and the glue lacks coating defects, which are not allowed and could impact EV battery performance and/or reliability.

Additionally, the disclosed device and process are configured for adhering to strict electrode manufacturing requirements. More specifically, the disclosed device and process are configured for preventing and/or limiting exposure of any metal during the manufacturing process to atmosphere.

Moreover, the disclosed device and process are configured for operation with a Start/Stop function that ensures continuous coating performance. Additionally, the disclosed device and process are configured to limit and/or avoid hammerhead, break coating failures, and/or the like.

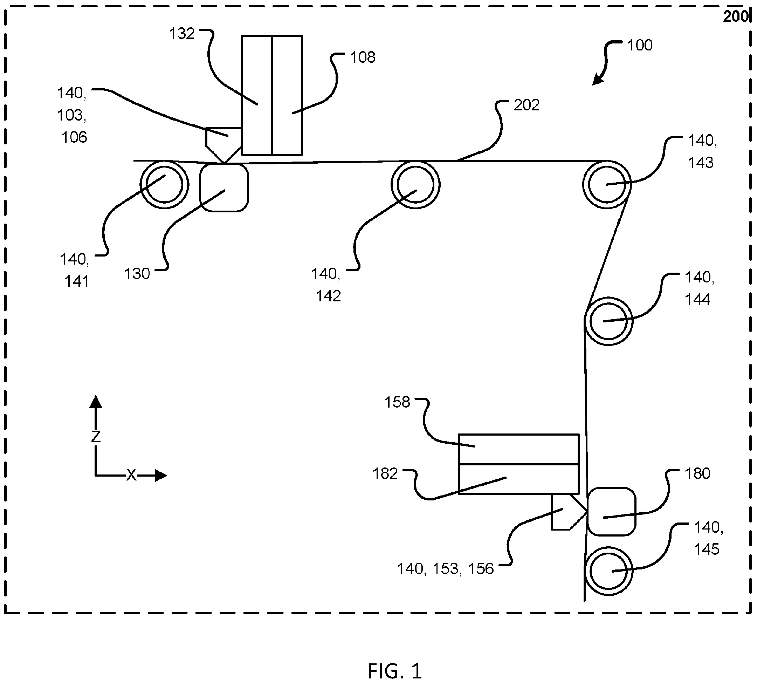

Figure 1 illustrates a schematic of a coating device according to aspects of the disclosure.

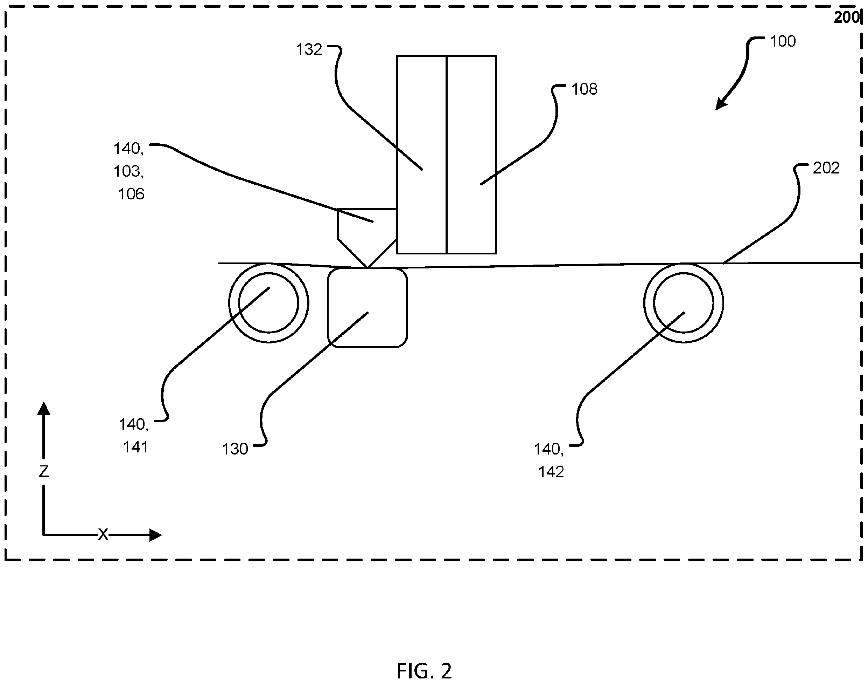

Figure 2 illustrates a partial schematic of the coating device according to Figure 1.

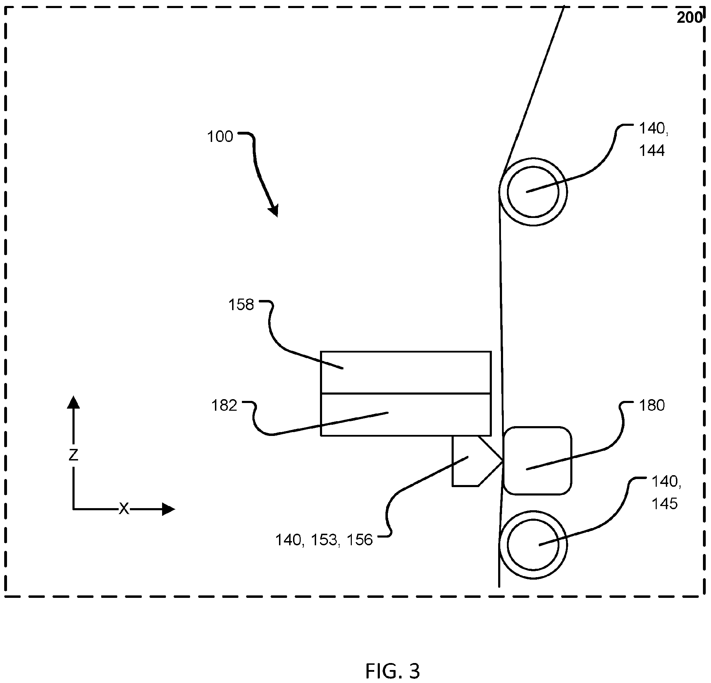

Figure 3 illustrates a partial schematic of the coating device according to Figure 1.

In particular, Figure 1 illustrates a schematic of a coating device 100 according to aspects of the disclosure. More specifically, the coating device 100 may be configured to implement an electrode glue coating application as further described herein.

The coating device 100 may include at least one applicator 140. In aspects, the coating device 100 may include a plurality of the at least one applicator 140. In aspects the at least one applicator 140 may be implemented by a metering slot coating applicator, a VCP [#definition for VCP is needed from the inventors] metering slot coating applicator, a band coat dispenser, and/or the like. The at least one applicator 140 may be configured to deliver very precise and consistent coating performance.

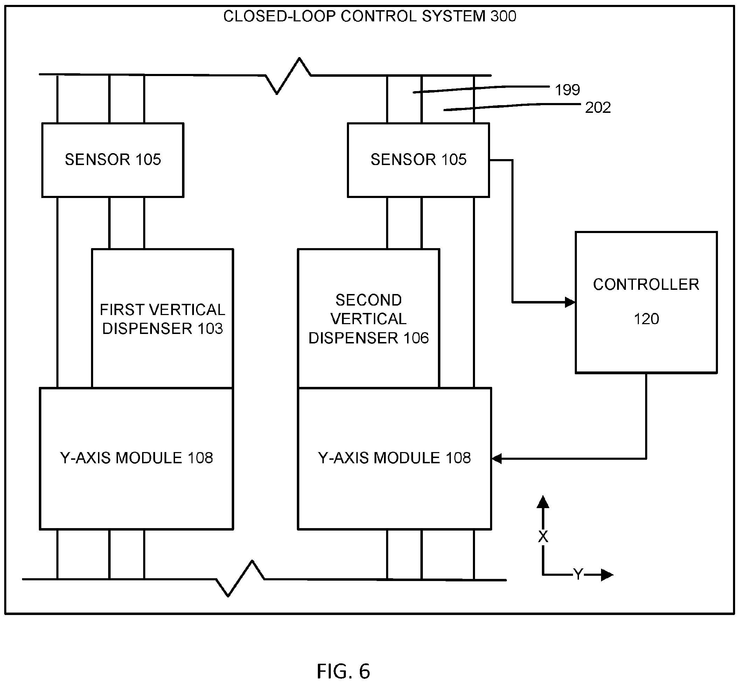

In aspects, the coating device 100 may be configured to be mounted into a slitting machine 200 (shown schematically without details), adjacent the slitting machine 200, and/or the like. Further, the coating device 100 and/or the at least one applicator 140 may be configured to coat a glue 199 (illustrated in Figure 6) onto two opposite sides of an electrode sheet 202.

In aspects, the electrode sheet 202 may be an electrode coil sheet, an electrode aluminum foil sheet, an EV electrode aluminum foil sheet, a thin aluminum sheet, an anode electrode, a cathode electrode, an electrode substrate, an EV battery component, and/or the like. In aspects, the electrode sheet 202 may have a thickness of 35 µm - 50 µm. However, the electrode sheet 202 may have different implementations and/or a different thickness depending on the specific application. In aspects, the glue 199 may be a glue, an adhesive, a hot melt glue, a hot melt adhesive and/or the like.

In aspects, the coating device 100 and/or the at least one applicator 140 may be configured to apply the glue 199 on the electrode sheet 202. In particular, the coating device 100 and/or the at least one applicator 140 may be configured to apply the glue 199 on two edges the electrode sheet 202 and/or the coating device 100 and/or the at least one applicator 140 may be configured to apply the glue 199 on two opposite sides of the electrode sheet 202.

In aspects, the coating device 100 may be implemented with any number of the at least one applicator 140. As illustrated in Figure 1, the coating device 100 may be implemented with four implementations of the at least one applicator 140. However, the coating device 100 may implement any number of the at least one applicator 140.

With further reference to Figure 1, the at least one applicator 140 of the coating device 100 may be implemented with a first vertical dispenser 103 and a second vertical dispenser 106. In aspects, the first vertical dispenser 103 and the second vertical dispenser 106 may be configured as band coat dispensers.

With further reference to Figure 1, the at least one applicator 140 of the coating device 100 may be further implemented with a first horizontal dispenser 153 and a second horizontal dispenser 156. In aspects, the first horizontal dispenser 153 and the second horizontal dispenser 156 may be configured as band coat dispensers.

In aspects, the coating device 100 and/or the at least one applicator 140 may be configured to apply the glue 199 on the electrode sheet 202 with a desired thickness. In aspects, the desired thickness of the glue 199 on the electrode sheet 202 may be 10 µm - 30 µm, 15 µm - 20 µm, or 20 µm - 30 µm. Other values of thickness of the glue 199 on the electrode sheet 202 may be implemented for other configurations of the electrode sheet 202.

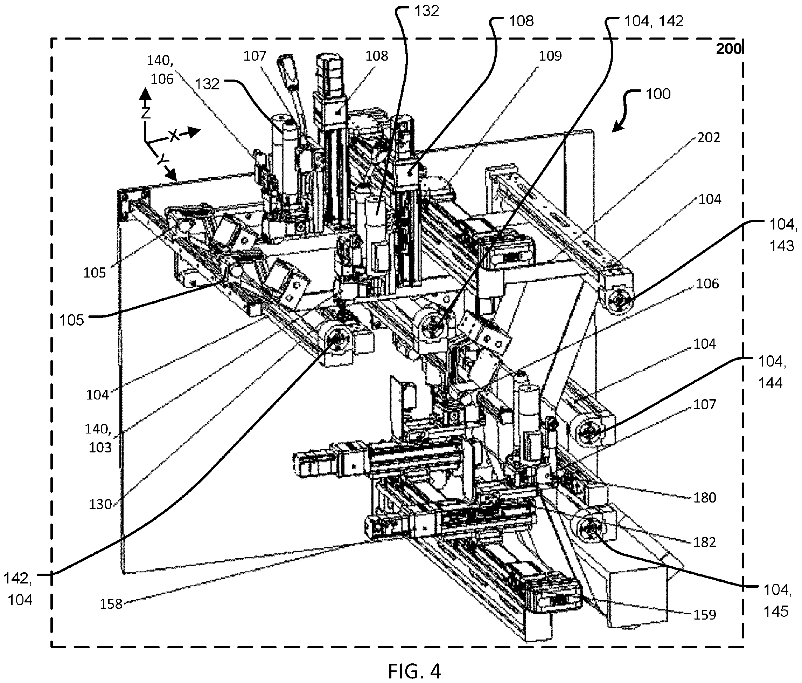

The coating device 100 may further include a first Y-axis module 108. The first vertical dispenser 103 and the second vertical dispenser 106 may be attached to an installation plate 107 (illustrated in Figure 4) of the first Y-axis module 108. In aspects, the first vertical dispenser 103 may be attached to an installation plate 107 of a first implementation of the first Y-axis module 108. In aspects, the second vertical dispenser 106 may be attached to an installation plate 107 of a second implementation of the first Y-axis module 108. The first Y-axis module 108 may be configured with one or more actuators, motors, gears, and/or the like to provide Y-axis movement of the at least one applicator 140 including the first vertical dispenser 103 and the second vertical dispenser 106.

In aspects of the coating device 100, the first vertical dispenser 103 and/or the second vertical dispenser 106 may be further connected to and/or responsive to a first Z-axis module 132. In aspects, the first Z-axis module 132 may be configured to move the first vertical dispenser 103 and/or the second vertical dispenser 106 up and down along the Z axis. The first Z-axis module 132 may be configured with one or more actuators, motors, gears, and/or the like to provide z-axis movement of the at least one applicator 140 including the first vertical dispenser 103 and the second vertical dispenser 106.

The coating device 100 may further include a second Y-axis module 158. The first horizontal dispenser 153 and the second horizontal dispenser 156 may be attached to an installation plate 107 of the second Y-axis module 158. In aspects, the first horizontal dispenser 153 may be attached to an installation plate 107 of a first implementation of the second Y-axis module 158. In aspects, the second horizontal dispenser 156 may be attached to an installation plate 107 of a second implementation of the second Y-axis module 158. The second Y-axis module 158 may be configured with one or more actuators, motors, gears, and/or the like to provide Y-axis movement of the at least one applicator 140 including the first horizontal dispenser 153 and the second horizontal dispenser 156.

In aspects of the coating device 100, the first horizontal dispenser 153 and/or the second horizontal dispenser 156 may be further connected to and/or responsive to an X-axis module 182. In aspects, the X-axis module 182 may be configured to move the first horizontal dispenser 153 and/or the second horizontal dispenser 156 up and down along the X-axis. The X-axis module 182 may be configured with one or more actuators, motors, gears, and/or the like to provide X-axis movement of the at least one applicator 140 including the first horizontal dispenser 153 and the second horizontal dispenser 156.

The coating device 100 may further include a first support bar 130. The first support bar 130 may be implemented as a hump support bar. The first support bar 130 may determine coating performance, glue pattern quality, and/or the like. In aspects, the first support bar 130 may be implemented with a geometrical structure, features, a profile, and/or the like. The first support bar 130 may be arranged under the slot nozzle tip of the first vertical dispenser 103 and/or the second vertical dispenser 106.

The coating device 100 may further include a second support bar 180. The second support bar 180 may be implemented as a hump support bar. The second support bar 180 may determine coating performance, glue pattern quality, and/or the like. In aspects, the second support bar 180 may be implemented with a geometrical structure, features, a profile, and/or the like. The second support bar 180 may be arranged under the slot nozzle tip of the first horizontal dispenser 153 and/or the second horizontal dispenser 156.

In aspects, the electrode sheet 202 may be formed of a thin material. For example, the electrode sheet 202 may be a thin aluminum sheet having a thickness of 35 µm - 50 µm. With reference to Figure 2, in aspects in order to obtain a desired thickness of the glue 199, the first vertical dispenser 103 and/or the second vertical dispenser 106 may contact and/or engage a surface of the electrode sheet 202. In particular, the first vertical dispenser 103 and/or the second vertical dispenser 106 may compress a surface of the electrode sheet 202 against the first support bar 130. Accordingly, the first support bar 130 together with the first vertical dispenser 103 and/or the second vertical dispenser 106 may provide tension of the electrode sheet 202 for accurate application of the glue 199 on a top surface of the electrode sheet 202.

Likewise, with reference to Figure 3, in aspects in order to obtain a desired thickness of the glue 199, the first horizontal dispenser 153 and/or the second horizontal dispenser 156 may contact and/or engage a surface of the electrode sheet 202. In particular, the first horizontal dispenser 153 and/or the second horizontal dispenser 156 may compress a surface of the electrode sheet 202 against the second support bar 180. Accordingly, the second support bar 180 together with the first horizontal dispenser 153 and/or the second horizontal dispenser 156 may provide tension of the electrode sheet 202 for accurate application of the glue 199 on a bottom surface of the electrode sheet 202.

In aspects, the first vertical dispenser 103 and/or the second vertical dispenser 106 may include a nozzle tip that includes a slot nozzle orifice. The slot nozzle orifice may dispense the glue 199 from the first vertical dispenser 103 and/or the second vertical dispenser 106.

In aspects, in order to obtain a desired thickness of the glue 199, the nozzle tip of the first vertical dispenser 103 and/or the second vertical dispenser 106 may contact and/or engage a surface of the electrode sheet 202.

In aspects, the first horizontal dispenser 153 and/or the second horizontal dispenser 156 may include a nozzle tip that includes a slot nozzle orifice. The slot nozzle orifice may dispense the glue 199 from the first horizontal dispenser 153 and/or the second horizontal dispenser 156. In aspects, in order to obtain a desired thickness of the glue 199, the nozzle tip of the first horizontal dispenser 153 and/or the second horizontal dispenser 156 may contact and/or engage a surface of the electrode sheet 202.

Additionally, the coating device 100 may include at least one roller assembly 104. In aspects, the coating device 100 may include a plurality of the at least one roller assembly 104 including a first roller assembly 141, a second roller assembly 142, a third roller assembly 143, a fourth roller assembly 144, and a fifth roller assembly 145.

In aspects, the first roller assembly 141 may be arranged adjacent the first support bar 130 on one side of the first vertical dispenser 103 and/or the second vertical dispenser 106. In aspects, the second roller assembly 142 may be arranged on opposite side of the first vertical dispenser 103 and/or the second vertical dispenser 106.

In aspects, the fifth roller assembly 145 may be arranged adjacent the second support bar 180 on one side of the first horizontal dispenser 153 and/or the second horizontal dispenser 156. In aspects, the fourth roller assembly 144 may be arranged on opposite side of the first horizontal dispenser 153 and/or the second horizontal dispenser 156.

Figure 4 illustrates a left side perspective of an exemplary implementation of the coating device according to Figure 1.

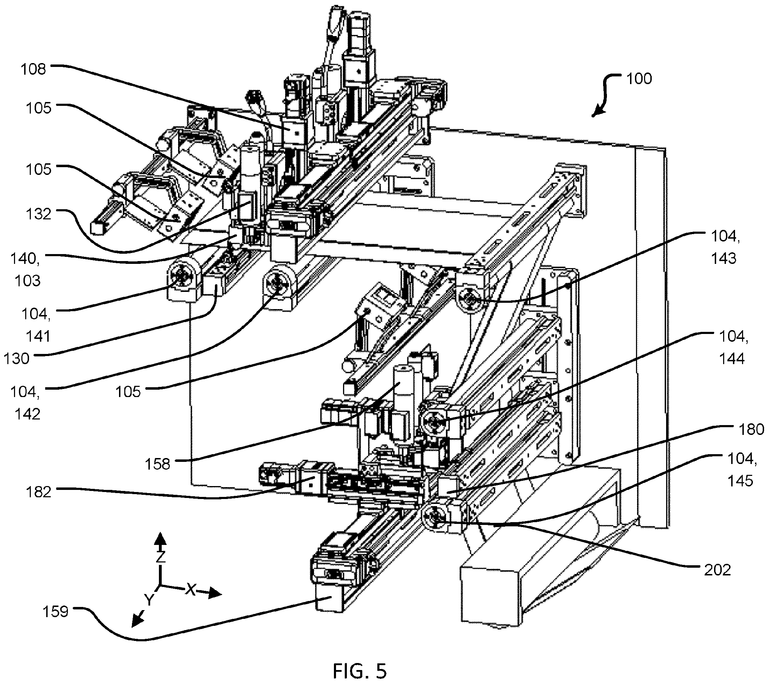

Figure 5 illustrates a right side perspective of the exemplary implementation of the coating device according to Figure 4.

As further described below, the coating device 100 may further implement braced rollers and hump support bars, along with visual monitoring and closed loop controlling system to orchestrate a coating process that may be incorporated into an existing slitting machine.

With reference to Figure 4 and Figure 5, the at least one roller assembly 104 of the coating device 100 may be attached to a bracket and supported by the bracket. Further, the at least one roller assembly 104 may include at least one roller, at least one bearing, at least one support bar, at least one support plate, and/or the like. More specifically, one or more of the first roller assembly 141, the second roller assembly 142, the third roller assembly 143, the fourth roller assembly 144, and the fifth roller assembly 145 may be attached to respective brackets and supported by the respective brackets. Further, one or more of the first roller assembly 141, the second roller assembly 142, the third roller assembly 143, the fourth roller assembly 144, and the fifth roller assembly 145 may include at least one roller, at least one bearing, at least one support bar, at least one support plate, and/or the like.

The first vertical dispenser 103, the second vertical dispenser 106 and the first Y-axis module 108 may be arranged on a bracket 109. In aspects, the bracket 109 may be configured as a strengthening bracket or support bracket for supporting the first vertical dispenser 103, the second vertical dispenser 106, the first Y-axis module 108, and/or the like. Moreover, the bracket 109 may allow movement of the at least one applicator 140 including the first vertical dispenser 103 and the second vertical dispenser 106 along the y-axis.

The first horizontal dispenser 153, the second horizontal dispenser 156 and the second Y-axis module 158 may be arranged on a bracket 159. In aspects, the bracket 159 may be configured as a strengthening bracket or support bracket for supporting the first horizontal dispenser 153, the second horizontal dispenser 156, the second Y-axis module 158, and/or the like. Moreover, the bracket 159 may allow movement of the at least one applicator 140 including the first horizontal dispenser 153 and the second horizontal dispenser 156 along the y-axis.

The coating device 100 may further include at least one sensor 105. The at least one sensor 105 may be a visual sensor, a camera visual sensor, a high accuracy camera visual sensor, and/or the like. In particular, the at least one sensor 105 may be configured to detect the glue 199 on the electrode sheet 202. In aspects, there may be an implementation of the at least one sensor 105 for detecting application of the glue 199 by the first vertical dispenser 103; there may be an implementation of the at least one sensor 105 for detecting application of the glue 199 by the second vertical dispenser 106; there may be an implementation of the at least one sensor 105 for detecting application of the glue 199 by the first horizontal dispenser 153; and there may be an implementation of the at least one sensor 105 for detecting application of the glue 199 by the second horizontal dispenser 156.

Figure 6 illustrates the coating device implementing a controller and aspects of the disclosure.

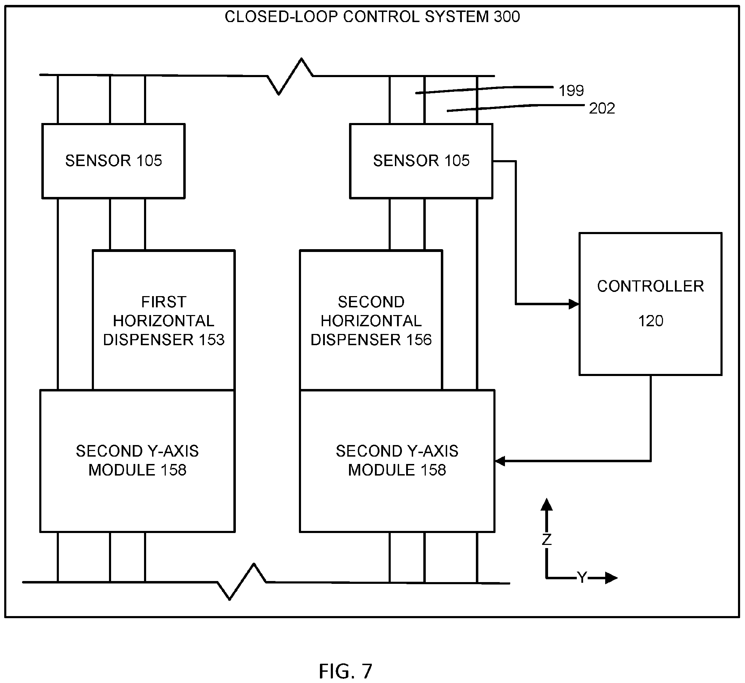

Figure 7 illustrates the coating device implementing a controller and aspects of the disclosure.

With reference to Figure 6, the coating device 100 may include a controller 120. In aspects, the controller 120 may be a dispenser controller, a controller for the entire operation of the coating device 100, and/or the like. The controller 120 may be configured as part of a closed-loop control system 300. In particular, the controller 120, the closed-loop control system 300, the at least one sensor 105, and/or the like may be configured to control aspects of the coating device 100 to ensure that the glue 199 is applied to a specified area of the electrode sheet 202. In particular, the at least one sensor 105, and/or the like may implement dynamic signals feeding back to the controller 120.

In particular, the controller 120 may control the first Y-axis module 108 in response to detection, signals, and/or the like from the at least one sensor 105. The first Y-axis module 108 may be configured to move the first vertical dispenser 103 and the second vertical dispenser 106 in or out along the y-axis so as to adjust a coating edge distance of the glue 199 on the electrode sheet 202. Accordingly, the coating device 100 may be configured to implement the first vertical dispenser 103 and the second vertical dispenser 106 to precisely coat the glue 199 onto a top surface of the electrode sheet 202 by implementing the closed-loop control system 300.

Additionally, with reference to Figure 7, the controller 120 may control the second Y-axis module 158 in response to detection, signals, and/or the like from the at least one sensor 105. The second Y-axis module 158 may be configured to move the first horizontal dispenser 153 and the second horizontal dispenser 156 in or out along the y-axis so as to adjust a coating edge distance of the glue 199 on the electrode sheet 202. Accordingly, the coating device 100 may be configured to implement the first horizontal dispenser 153 and the second horizontal dispenser 156 to precisely coat the glue 199 onto a bottom surface of the electrode sheet 202 by implementing the closed-loop control system 300.

The electrode sheet 202 may be arranged between the first vertical dispenser 103 and/or the second vertical dispenser 106 and the first support bar 130. As described above, the slot nozzle tip of the first vertical dispenser 103 and/or the second vertical dispenser 106 may be slightly engaged with the electrode sheet 202. This arrangement of components within the coating device 100 may deform, bend, and/or the like the electrode sheet 202 in a direction opposite the z-axis direction.

In this regard, the first Z-axis module 132 may be configured to move the first vertical dispenser 103 and/or the second vertical dispenser 106 such that there is a dent, deformation, bend, and/or the like in the electrode sheet 202. Accordingly, this engagement results and a tension force in the electrode sheet 202. In this regard, the higher tension force in the electrode sheet 202, the better coating performance is delivered by the first vertical dispenser 103 and/or the second vertical dispenser 106 of the coating device 100. However, the amount of tension provided by the first Z-axis module 132 in conjunction with the at least one applicator 140 should be balanced, otherwise the electrode sheet 202 may be damaged. For example, crumpled, torn, and/or the like.

Accordingly, the first vertical dispenser 103 and the second vertical dispenser 106 are configured to provide a vertical coating segment of the coating device 100. In particular, the first vertical dispenser 103 and the second vertical dispenser 106 may be implemented as two aligned coating guns apply the glue 199 onto bilateral edges of a top surface of the electrode sheet 202.

In aspects, the first horizontal dispenser 153 and the second horizontal dispenser 156 may be configured to operate horizontally to apply the glue 199 onto the opposite side of the electrode sheet 202. In aspects, the first horizontal dispenser 153 and the second horizontal dispenser 156 may be configured as a slot nozzle combination design is configured to apply the glue 199 onto a straight moving portion of the electrode sheet 202.

In aspects, the electrode sheet 202 passes across all implementations of the at least one applicator 140 and lays across the second support bar 180 and the first support bar 130. In particular, the electrode sheet 202 may be received from the slitting machine 200 by the fifth roller assembly 145. Thereafter, the electrode sheet 202 may be guided between the first horizontal dispenser 153, the second horizontal dispenser 156, and the second support bar 180 while the first horizontal dispenser 153 and the second horizontal dispenser 156 apply the glue 199 onto a surface of the electrode sheet 202.

Thereafter, the electrode sheet 202 may be guided by the fourth roller assembly 144, the third roller assembly 143, and the second roller assembly 142. Thereafter, the electrode sheet 202 may be guided between the first vertical dispenser 103, the second vertical dispenser 106, and the first support bar 130 while the first vertical dispenser 103 and the second vertical dispenser 106 apply the glue 199 onto an opposite surface of the electrode sheet 202.

In aspects, the electrode sheet 202 may be moved by a drive-wheel and a driven-wheel that may be arranged, implemented by, controlled by, and/or the like by the slitting machine 200. In aspects, the electrode sheet 202 may be moved by driven rotation of one or more of the first roller assembly 141, the second roller assembly 142, the third roller assembly 143, the fourth roller assembly 144, the fifth roller assembly 145, and/or the like.

Additionally, the coating device 100 may include a melter. The melter may supply the glue 199, such as hot melt glue. Thereafter, the glue 199 may be fed through a hose or other conduit into the at least one applicator 140. In particular, the glue 199 may be fed through one or more hoses or other conduits into the first vertical dispenser 103, the second vertical dispenser 106, the first horizontal dispenser 153, and the second horizontal dispenser 156.

In aspects, the coating device 100 may further include a high precision metering pump to ensure the precise delivery of the glue 199 to the at least one applicator 140. In aspects, the coating device 100 may further include high precision metering pumps to ensure the precise delivery of the glue 199 to the first vertical dispenser 103, the second vertical dispenser 106, the first horizontal dispenser 153, and the second horizontal dispenser 156.

In aspects, the coating device 100, the at least one applicator 140, the first vertical dispenser 103, the second vertical dispenser 106, the first horizontal dispenser 153, and/or the second horizontal dispenser 156 may further include one or more snuff-back control modules. The snuff-back control module may be configured to prevent inadvertent dispensing of the glue 199 from the at least one applicator 140, the first vertical dispenser 103, the second vertical dispenser 106, the first horizontal dispenser 153, and/or the second horizontal dispenser 156. In aspects, the snuff-back control module may be directly attached on top of slot nozzle glue flow passage of the at least one applicator 140, the first vertical dispenser 103, the second vertical dispenser 106, the first horizontal dispenser 153, and/or the second horizontal dispenser 156.

Further, the at least one applicator 140, the first vertical dispenser 103, the second vertical dispenser 106, the first horizontal dispenser 153, and/or the second horizontal dispenser 156 may be configured with a sandwich designed slot nozzle assembly. In particular, the sandwich designed slot nozzle assembly may include one or more of a nozzle lip, a cut-out shim, a nozzle cover, and/or the like.

In aspects of the coating device 100, the first Y-axis module 108 is configured for moving the first vertical dispenser 103 and/or the second vertical dispenser 106 forward and/or backward to keep nozzle tip positioning of the first vertical dispenser 103 and/or the second vertical dispenser 106 to the same coating area of the glue 199 in each of the edges of the electrode sheet 202.

In aspects of the coating device 100, the second Y-axis module 158 is configured for moving the first horizontal dispenser 153 and/or the second horizontal dispenser 156 forward and/or backward to keep nozzle tip positioning of the first horizontal dispenser 153 and/or the second horizontal dispenser 156 to the same coating area of the glue 199 in each of the edges of the electrode sheet 202.

In aspects of the coating device 100, the first Z-axis module 132 may drive the first vertical dispenser 103 and/or the second vertical dispenser 106 up and/or down to compress or decompress the electrode sheet 202 onto the first support bar 130. Accordingly, the interior tension force is established in the electrode sheet 202 for application of the glue 199 by the first vertical dispenser 103 and/or the second vertical dispenser 106 onto the electrode sheet 202. This this ensures coating performance of the glue 199 onto the electrode sheet 202 significantly.

In aspects of the coating device 100, the X-axis module 182 may drive the first horizontal dispenser 153 and/or the second horizontal dispenser 156 up and/or down to compress or decompress the electrode sheet 202 onto the second support bar 180. Accordingly, the interior tension force is established in the electrode sheet 202 for application of the glue 199 by the first horizontal dispenser 153 and/or the second horizontal dispenser 156 onto the electrode sheet 202. This this ensures coating performance of the glue 199 onto the electrode sheet 202 significantly.

In aspects of the coating device 100, the first vertical dispenser 103 and/or the second vertical dispenser 106 may be implemented as vertical coating guns to apply the glue 199 onto the top surface of the electrode sheet 202.

In aspects of the coating device 100, the first horizontal dispenser 153 and/or the second horizontal dispenser 156 pay be implemented as horizontal coating guns to apply the glue 199 onto an opposite surface the electrode sheet 202.

In aspects, the at least one applicator 140, the first roller assembly 141, the second roller assembly 142, the third roller assembly 143, the fourth roller assembly 144, and the fifth roller assembly 145 may be implemented as braced rollers. In aspects, the at least one applicator 140, the first roller assembly 141, the second roller assembly 142, the third roller assembly 143, the fourth roller assembly 144, the fifth roller assembly 145, the first support bar 130, and the second support bar 180 may be configured to be robust and rigid such that the coating device 100 remains stable to prevent the electrode sheet 202 from warping. Further, the coating device 100 may implement additional equipment and high structure strength components to ensure coating performance of the glue 199 on opposing surfaces of the electrode sheet 202. The coating result can be consistently obtained in case linemachine exceeds over the Max. speed. 100 m/min and plus.

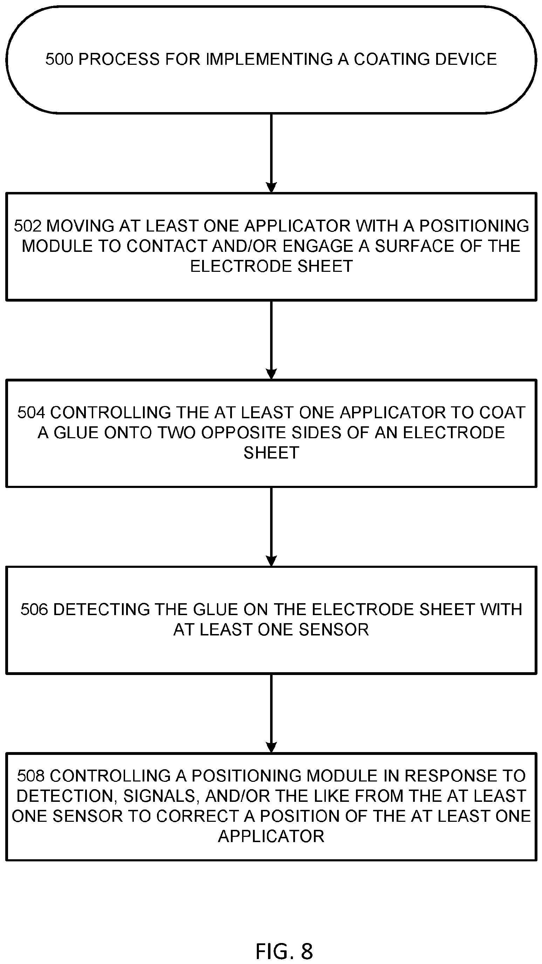

Figure 8 illustrates an exemplary process for process of implementing a coating device according to the disclosure.

In particular, Figure 8 shows an exemplary process for implementing a coating device 500 according to the disclosure. In particular, it should be noted that the process of implementing a coating device 500 is merely exemplary and may be modified consistent with the various aspects disclosed herein. Moreover, the process of implementing a coating device 500 of the disclosure may include a process of manufacturing the coating device 100. It should be noted that the process of implementing a coating device 500 may be performed in a different order consistent with the aspects described above. Moreover, the process of implementing a coating device 500 may be modified to have more or fewer process steps consistent with the various aspects disclosed herein. In particular, the process of implementing a coating device 500 includes the process of implementing the coating device 100 as described herein.

The process of implementing a coating device 500 of the disclosure may include moving at least one applicator with a positioning module to contact and/or engage a surface of the electrode sheet 502. In this regard, the moving at least one applicator with a positioning module to contact and/or engage a surface of the electrode sheet 502 may include any one or more materials, structures, arrangements, processes, and/or the like as described herein. Moreover, one or more proceeding or subsequent processes may also be implemented with respect to the moving at least one applicator with a positioning module to contact and/or engage a surface of the electrode sheet 502 consistent with the disclosure.

In aspects, the moving at least one applicator with a positioning module to contact and/or engage a surface of the electrode sheet 502 may include moving the at least one applicator 140 with the first Z-axis module 132 and/or the X-axis module 182 to contact and/or engage a surface of the electrode sheet 202 as described herein.

In aspects, the moving at least one applicator with a positioning module to contact and/or engage a surface of the electrode sheet 502 may include moving the first vertical dispenser 103, the second vertical dispenser 106, the first vertical dispenser 103 and/or the second vertical dispenser 106 with the first Z-axis module 132 and/or the X-axis module 182 to contact and/or engage a surface of the electrode sheet 202 as described herein.

The process of implementing a coating device 500 of the disclosure may include controlling the at least one applicator to coat a glue onto two opposite sides of an electrode sheet 504. In this regard, the controlling the at least one applicator to coat a glue onto two opposite sides of an electrode sheet 504 may include any one or more materials, structures, arrangements, processes, and/or the like as described herein. Moreover, one or more proceeding or subsequent processes may also be implemented with respect to the controlling the at least one applicator to coat a glue onto two opposite sides of an electrode sheet 504 consistent with the disclosure.

In aspects, the controlling the at least one applicator to coat a glue onto two opposite sides of an electrode sheet 504 may include controlling the at least one applicator 140 to coat a glue 199 onto two opposite sides of an electrode sheet 202 as described herein.

In aspects, the controlling the at least one applicator to coat a glue onto two opposite sides of an electrode sheet 504 may include controlling the first vertical dispenser 103, the second vertical dispenser 106, the first vertical dispenser 103 and/or the second vertical dispenser 106 to coat a glue 199 onto two opposite sides of an electrode sheet 202 as described herein.

The process of implementing a coating device 500 of the disclosure may include detecting the glue on the electrode sheet with at least one sensor 506. In this regard, the detecting the glue on the electrode sheet with at least one sensor 506 may include any one or more materials, structures, arrangements, processes, and/or the like as described herein. Moreover, one or more proceeding or subsequent processes may also be implemented with respect to the detecting the glue on the electrode sheet with at least one sensor 506 consistent with the disclosure. In aspects, the detecting the glue on the electrode sheet 202 with at least one sensor 506 includes detecting the glue 199 on the electrode sheet 202 with the at least one sensor 105 as described herein.

The process of implementing a coating device 500 of the disclosure may include controlling positioning module in response to detection, signals, and/or the like from the at least one sensor to correct a position of the at least one applicator 508. In this regard, the controlling positioning module in response to detection, signals, and/or the like from the at least one sensor to correct a position of the at least one applicator 508 may include any one or more materials, structures, arrangements, processes, and/or the like as described herein. Moreover, one or more proceeding or subsequent processes may also be implemented with respect to the controlling positioning module in response to detection, signals, and/or the like from the at least one sensor to correct a position of the at least one applicator 508 consistent with the disclosure.

In aspects, the controlling positioning module in response to detection, signals, and/or the like from the at least one sensor to correct a position of the at least one applicator 508 may include controlling the first Y-axis module 108 and/or the second Y-axis module 158 in response to detection, signals, and/or the like from the at least one sensor 105 to correct a position of the at least one applicator 140 as described herein.

In aspects, the controlling positioning module in response to detection, signals, and/or the like from the at least one sensor to correct a position of the at least one applicator 508 may include controlling the first Y-axis module 108 and/or the second Y-axis module 158 in response to detection, signals, and/or the like from the at least one sensor 105 to correct a position of the first vertical dispenser 103, the second vertical dispenser 106, the first vertical dispenser 103 and/or the second vertical dispenser 106 as described herein.

The following are a number of nonlimiting EXAMPLES of aspects of the disclosure.

One EXAMPLE includes: a coating device that includes at least one applicator configured to coat a glue onto two opposite sides of an electrode sheet. The coating device in addition includes at least one roller assembly configured to guide the electrode sheet past the at least one applicator. The coating device moreover includes at least one support bar arranged under the at least one applicator.

The above-noted EXAMPLE may further include any one or a combination of more than one of the following EXAMPLES: The coating device of the above-noted EXAMPLE where the at least one applicator may include a plurality of the at least one applicator. The coating device of the above-noted EXAMPLE where the at least one applicator may include a metering slot coating applicator, a VCP metering slot coating applicator, and/or a band coat dispenser. The coating device of the above-noted EXAMPLE where the coating device is configured to be mounted into a slitting machine and/or adjacent a slitting machine. The coating device of the above-noted EXAMPLE where the electrode sheet may include an electrode coil sheet, an electrode aluminum foil sheet, an EV electrode aluminum foil sheet, a thin aluminum sheet, an anode electrode, a cathode electrode, an electrode substrate, and/or an EV battery component. The coating device of the above-noted EXAMPLE may include at least one sensor configured to detect the glue on the electrode sheet. The coating device of the above-noted EXAMPLE where the at least one applicator is configured to apply the glue on two edges the electrode sheet. The coating device of the above-noted EXAMPLE where the at least one roller assembly is attached to a bracket and supported by the bracket. The coating device of the above-noted EXAMPLE where the at least one roller assembly may include at least one roller, at least one bearing, at least one support bar, and/or at least one support plate. The coating device of the above-noted EXAMPLE where the at least one applicator may include a first vertical dispenser, a second vertical dispenser, a first horizontal dispenser, and a second horizontal dispenser. The coating device of the above-noted EXAMPLE may include a first y-axis module. The coating device of the above-noted EXAMPLE where the first vertical dispenser is attached to a first implementation of the first y-axis module; and where the second vertical dispenser is attached to a second implementation of the first y-axis module. The coating device of the above-noted EXAMPLE where the first y-axis module is configured with one or more actuators, motors, and/or gears to provide y-axis movement of the first vertical dispenser and the second vertical dispenser. The coating device of the above-noted EXAMPLE where the first vertical dispenser, the second vertical dispenser and the first y-axis module are arranged on a bracket. The coating device of the above-noted EXAMPLE where the bracket is configured to allow movement of the at least one applicator including the first vertical dispenser and the second vertical dispenser along a y-axis. The coating device of the above-noted EXAMPLE may include a first z-axis module configured to move the first vertical dispenser and/or the second vertical dispenser up and down along a z axis. The coating device of the above-noted EXAMPLE may include a second y-axis module. The coating device of the above-noted EXAMPLE where the first horizontal dispenser is attached to a first implementation of the second y-axis module; and where the second horizontal dispenser is attached to a second implementation of the second y-axis module. The coating device of the above-noted EXAMPLE where the second y-axis module is configured with one or more actuators, motors, and/or gears to provide y-axis movement of the first horizontal dispenser and the second horizontal dispenser. The coating device of the above-noted EXAMPLE where the first horizontal dispenser, the second horizontal dispenser and the second y-axis module are arranged on a bracket. The coating device of the above-noted EXAMPLE where the bracket is configured to allow movement of the at least one applicator including the first horizontal dispenser and the second horizontal dispenser along a y-axis. The coating device of the above-noted EXAMPLE may include at least one sensor configured to detect the glue on the electrode sheet. The coating device of the above-noted EXAMPLE where an implementation of the at least one sensor is configured to detect application of the glue by the first vertical dispenser; where an implementation of the at least one sensor is configured to detect application of the glue by the second vertical dispenser; where an implementation of the at least one sensor is configured to detect application of the glue by the first horizontal dispenser; and where an implementation of the at least one sensor is configured to detect application of the glue by the second horizontal dispenser. The coating device of the above-noted EXAMPLE may include a controller configured as part of a closed-loop control system. The coating device of the above-noted EXAMPLE where the controller is configured to control a first y-axis module in response to the at least one sensor to move the first vertical dispenser and the second vertical dispenser in or out along a y-axis so as to adjust a coating edge distance of the glue on the electrode sheet. The coating device of the above-noted EXAMPLE where the controller is configured to control the second y-axis module in response to the at least one sensor to move the first horizontal dispenser and the second horizontal dispenser in or out along a y-axis so as to adjust a coating edge distance of the glue on the electrode sheet. The coating device of the above-noted EXAMPLE may include an x-axis module configured to move the first horizontal dispenser and/or the second horizontal dispenser up and down along an x-axis. The coating device of the above-noted EXAMPLE where the at least one support bar may include a first support bar arranged under the first vertical dispenser and/or the second vertical dispenser; and where the at least one support bar may include a second support bar arranged under the first horizontal dispenser and/or the second horizontal dispenser. The coating device of the above-noted EXAMPLE where the first vertical dispenser and/or the second vertical dispenser are configured to contact and/or engage a surface of the electrode sheet against the first support bar. The coating device of the above-noted EXAMPLE where the first horizontal dispenser and/or the second horizontal dispenser are configured contact and/or engage a surface of the electrode sheet against the second support bar. The coating device of the above-noted EXAMPLE where the at least one roller assembly may include a first roller assembly, a second roller assembly, a third roller assembly, a fourth roller assembly, and a fifth roller assembly. The coating device of the above-noted EXAMPLE where the first roller assembly is arranged adjacent the first support bar on one side of the first vertical dispenser and/or the second vertical dispenser. The coating device of the above-noted EXAMPLE where the second roller assembly is arranged on an opposite side of the first vertical dispenser and/or the second vertical dispenser. The coating device of the above-noted EXAMPLE where the fifth roller assembly is arranged adjacent the second support bar on one side of the first horizontal dispenser and/or the second horizontal dispenser. The coating device of the above-noted EXAMPLE where the fourth roller assembly is arranged on opposite side of the first horizontal dispenser and/or the second horizontal dispenser. The coating device of the above-noted EXAMPLE where one or more of the first roller assembly, the second roller assembly, the third roller assembly, the fourth roller assembly, and the fifth roller assembly are attached to respective brackets and supported by the respective brackets. The coating device of the above-noted EXAMPLE where the first roller assembly, the second roller assembly, the third roller assembly, the fourth roller assembly, and the fifth roller assembly may include at least one roller, at least one bearing, at least one support bar, and/or at least one support plate. The coating device of the above-noted EXAMPLE where the electrode sheet is received from a slitting machine by the fifth roller assembly; where the electrode sheet is guided between the first horizontal dispenser, the second horizontal dispenser, and the second support bar while the first horizontal dispenser and the second horizontal dispenser apply the glue onto a surface of the electrode sheet; where the electrode sheet is guided by the fourth roller assembly, the third roller assembly, and the second roller assembly; and where the electrode sheet is guided between the first vertical dispenser, the second vertical dispenser, and the first support bar while the first vertical dispenser and the second vertical dispenser apply the glue onto an opposite surface of the electrode sheet. The coating device of the above-noted EXAMPLE where the first horizontal dispenser and the second horizontal dispenser are configured to operate horizontally to apply the glue onto an opposite side of the electrode sheet. The coating device of the above-noted EXAMPLE may include a melter to supply the glue to the first vertical dispenser, the second vertical dispenser, the first horizontal dispenser, and the second horizontal dispenser. The coating device of the above-noted EXAMPLE may include one or more snuff-back control modules configured to prevent inadvertent dispensing of the glue from the at least one applicator, the first vertical dispenser, the second vertical dispenser, the first horizontal dispenser, and/or the second horizontal dispenser. The coating device of the above-noted EXAMPLE may include a melter to supply the glue to the at least one applicator. The coating device of the above-noted EXAMPLE may include a high precision metering pump to ensure a precise delivery of the glue to the at least one applicator.

One EXAMPLE includes: a process that includes coating a glue onto two opposite sides of an electrode sheet with at least one applicator. The process in addition includes guiding the electrode sheet past the at least one applicator with at least one roller assembly. The process moreover includes arranging at least one support bar under the at least one applicator.

The above-noted EXAMPLE may further include any one or a combination of more than one of the following EXAMPLES: The process of the above-noted EXAMPLE where the at least one applicator may include a plurality of the at least one applicator. The process of the above-noted EXAMPLE where the at least one applicator may include a metering slot coating applicator, a VCP metering slot coating applicator, and/or a band coat dispenser. The process of the above-noted EXAMPLE where the coating device is configured to be mounted into a slitting machine and/or adjacent a slitting machine. The process of the above-noted EXAMPLE where the electrode sheet may include an electrode coil sheet, an electrode aluminum foil sheet, an EV electrode aluminum foil sheet, a thin aluminum sheet, an anode electrode, a cathode electrode, an electrode substrate, and/or an EV battery component. The process of the above-noted EXAMPLE may include detecting the glue on the electrode sheet with at least one sensor. The process of the above-noted EXAMPLE where the at least one applicator is configured to apply the glue on two edges the electrode sheet. The process of the above-noted EXAMPLE where the at least one roller assembly is attached to a bracket and supported by the bracket. The process of the above-noted EXAMPLE where the at least one roller assembly may include at least one roller, at least one bearing, at least one support bar, and/or at least one support plate. The process of the above-noted EXAMPLE where the at least one applicator may include a first vertical dispenser, a second vertical dispenser, a first horizontal dispenser, and a second horizontal dispenser. The process of the above-noted EXAMPLE may include implementing a first y-axis module. The process of the above-noted EXAMPLE where the first vertical dispenser is attached to a first implementation of the first y-axis module; and where the second vertical dispenser is attached to a second implementation of the first y-axis module. The process of the above-noted EXAMPLE where the first y-axis module is configured with one or more actuators, motors, and/or gears to provide y-axis movement of the first vertical dispenser and the second vertical dispenser. The process of the above-noted EXAMPLE where the first vertical dispenser, the second vertical dispenser and the first y-axis module are arranged on a bracket. The process of the above-noted EXAMPLE where the bracket is configured to allow movement of the at least one applicator including the first vertical dispenser and the second vertical dispenser along a y-axis. The process of the above-noted EXAMPLE may include implementing a first z-axis module configured to move the first vertical dispenser and/or the second vertical dispenser up and down along a z axis. The process of the above-noted EXAMPLE may include implementing a second y-axis module. The process of the above-noted EXAMPLE where the first horizontal dispenser is attached to a first implementation of the second y-axis module; and where the second horizontal dispenser is attached to a second implementation of the second y-axis module. The process of the above-noted EXAMPLE where the second y-axis module is configured with one or more actuators, motors, and/or gears to provide y-axis movement of the first horizontal dispenser and the second horizontal dispenser. The process of the above-noted EXAMPLE where the first horizontal dispenser, the second horizontal dispenser and the second y-axis module are arranged on a bracket. The process of the above-noted EXAMPLE where the bracket is configured to allow movement of the at least one applicator including the first horizontal dispenser and the second horizontal dispenser along a y-axis. The process of the above-noted EXAMPLE may include detecting the glue on the electrode sheet with at least one sensor. The process of the above-noted EXAMPLE where an implementation of the at least one sensor is configured to detect application of the glue by the first vertical dispenser; where an implementation of the at least one sensor is configured to detect application of the glue by the second vertical dispenser; where an implementation of the at least one sensor is configured to detect application of the glue by the first horizontal dispenser; and where an implementation of the at least one sensor is configured to detect application of the glue by the second horizontal dispenser. The process of the above-noted EXAMPLE may include configuring a controller as part of a closed-loop control system. The process of the above-noted EXAMPLE where the controller is configured to control a first y-axis module in response to the at least one sensor to move the first vertical dispenser and the second vertical dispenser in or out along a y-axis so as to adjust a coating edge distance of the glue on the electrode sheet. The process of the above-noted EXAMPLE where the controller is configured to control the second y-axis module in response to the at least one sensor to move the first horizontal dispenser and the second horizontal dispenser in or out along a y-axis so as to adjust a coating edge distance of the glue on the electrode sheet. The process of the above-noted EXAMPLE may include implementing an x-axis module configured to move the first horizontal dispenser and/or the second horizontal dispenser up and down along an x-axis. The process of the above-noted EXAMPLE where the at least one support bar may include a first support bar arranged under the first vertical dispenser and/or the second vertical dispenser; and where the at least one support bar may include a second support bar arranged under the first horizontal dispenser and/or the second horizontal dispenser. The process of the above-noted EXAMPLE where the first vertical dispenser and/or the second vertical dispenser are configured to contact and/or engage a surface of the electrode sheet against the first support bar. The process of the above-noted EXAMPLE where the first horizontal dispenser and/or the second horizontal dispenser are configured contact and/or engage a surface of the electrode sheet against the second support bar. The process of the above-noted EXAMPLE where the at least one roller assembly may include a first roller assembly, a second roller assembly, a third roller assembly, a fourth roller assembly, and a fifth roller assembly. The process of the above-noted EXAMPLE where the first roller assembly is arranged adjacent the first support bar on one side of the first vertical dispenser and/or the second vertical dispenser. The process of the above-noted EXAMPLE where the second roller assembly is arranged on an opposite side of the first vertical dispenser and/or the second vertical dispenser. The process of the above-noted EXAMPLE where the fifth roller assembly is arranged adjacent the second support bar on one side of the first horizontal dispenser and/or the second horizontal dispenser. The process of the above-noted EXAMPLE where the fourth roller assembly is arranged on opposite side of the first horizontal dispenser and/or the second horizontal dispenser. The process of the above-noted EXAMPLE where one or more of the first roller assembly, the second roller assembly, the third roller assembly, the fourth roller assembly, and the fifth roller assembly are attached to respective brackets and supported by the respective brackets. The process of the above-noted EXAMPLE where the first roller assembly, the second roller assembly, the third roller assembly, the fourth roller assembly, and the fifth roller assembly may include at least one roller, at least one bearing, at least one support bar, and/or at least one support plate. The process of the above-noted EXAMPLE where the electrode sheet is received from a slitting machine by the fifth roller assembly; where the electrode sheet is guided between the first horizontal dispenser, the second horizontal dispenser, and the second support bar while the first horizontal dispenser and the second horizontal dispenser apply the glue onto a surface of the electrode sheet; where the electrode sheet is guided by the fourth roller assembly, the third roller assembly, and the second roller assembly; and where the electrode sheet is guided between the first vertical dispenser, the second vertical dispenser, and the first support bar while the first vertical dispenser and the second vertical dispenser apply the glue onto an opposite surface of the electrode sheet. The process of the above-noted EXAMPLE where the first horizontal dispenser and the second horizontal dispenser are configured to operate horizontally to apply the glue onto an opposite side of the electrode sheet. The process of the above-noted EXAMPLE may include implementing a melter to supply the glue to the first vertical dispenser, the second vertical dispenser, the first horizontal dispenser, and the second horizontal dispenser. The process of the above-noted EXAMPLE may include implementing one or more snuff-back control modules configured to prevent inadvertent dispensing of the glue from the at least one applicator, the first vertical dispenser, the second vertical dispenser, the first horizontal dispenser, and/or the second horizontal dispenser. The process of the above-noted EXAMPLE may include implementing a melter to supply the glue to the at least one applicator. The process of the above-noted EXAMPLE may include implementing a high precision metering pump to ensure a precise delivery of the glue to the at least one applicator.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto another element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over another element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to another element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular aspects only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

It should also be noted that the software implementations of the disclosure as described herein are optionally stored on a tangible storage medium, such as: a magnetic medium such as a disk or tape; a magneto-optical or optical medium such as a disk; or a solid state medium such as a memory card or other package that houses one or more read-only (nonvolatile) memories, random access memories, or other re-writable (volatile) memories. A digital file attachment to email or other self-contained information archive or set of archives is considered a distribution medium equivalent to a tangible storage medium. Accordingly, the disclosure is considered to include a tangible storage medium or distribution medium, as listed herein and including art-recognized equivalents and successor media, in which the software implementations herein are stored.

Additionally, the various aspects of the disclosure may be implemented in a non-generic computer implementation. Moreover, the various aspects of the disclosure set forth herein improve the functioning of the system as is apparent from the disclosure hereof. Furthermore, the various aspects of the disclosure involve computer hardware that it specifically programmed to solve the complex problem addressed by the disclosure. Accordingly, the various aspects of the disclosure improve the functioning of the system overall in its specific implementation to perform the process set forth by the disclosure and as defined by the claims.

Aspects of the disclosure may be implemented in any type of computing devices, such as, e.g., a desktop computer, personal computer, a laptop/mobile computer, a personal data assistant (PDA), a mobile phone, a tablet computer, cloud computing device, and the like, with wired/wireless communications capabilities via the communication channels.

The artificial intelligence and/or machine learning may utilize any number of approaches including one or more of cybernetics and brain simulation, symbolic, cognitive simulation, logic-based, anti-logic, knowledge-based, sub-symbolic, embodied intelligence, computational intelligence and soft computing, machine learning and statistics, and the like.

The many features and advantages of the disclosure are apparent from the detailed specification, and, thus, it is intended by the appended claims to cover all such features and advantages of the disclosure which fall within the true spirit and scope of the disclosure. Further, since numerous modifications and variations will readily occur to those skilled in the art, it is not desired to limit the disclosure to the exact construction and operation illustrated and described, and, accordingly, all suitable modifications and equivalents may be resorted to that fall within the scope of the disclosure.

**The invention is further described by the following embodiments, wherein:**
Embodiment 1. A coating device configured to implement an electrode glue coating comprising:
   at least one applicator configured to coat a glue onto two opposite sides of an electrode sheet;
   at least one roller assembly configured to guide the electrode sheet past the at least one applicator; and
   at least one support bar arranged under the at least one applicator.
Embodiment 2. The coating device according to embodiment 1 wherein the at least one applicator comprises a plurality of the at least one applicator.
Embodiment 3. The coating device according to embodiment 1 wherein the at least one applicator comprises a metering slot coating applicator, a VCP metering slot coating applicator, and/or a band coat dispenser.
Embodiment 4. The coating device according to embodiment 1 wherein the coating device is configured to be mounted into a slitting machine and/or adjacent a slitting machine.
Embodiment 5. The coating device according to embodiment 1 wherein the electrode sheet comprises an electrode coil sheet, an electrode aluminum foil sheet, an EV electrode aluminum foil sheet, a thin aluminum sheet, an anode electrode, a cathode electrode, an electrode substrate, and/or an EV battery component.
Embodiment 6. The coating device according to embodiment 1 further comprising at least one sensor configured to detect the glue on the electrode sheet.
Embodiment 7. The coating device according to embodiment 1 wherein the at least one applicator is configured to apply the glue on two edges the electrode sheet.
Embodiment 8. The coating device according to embodiment 1 wherein the at least one roller assembly is attached to a bracket and supported by the bracket.
Embodiment 9. The coating device according to embodiment 1 wherein the at least one roller assembly comprises at least one roller, at least one bearing, at least one support bar, and/or at least one support plate.
Embodiment 10. The coating device according to embodiment 1 wherein the at least one applicator comprises a first vertical dispenser, a second vertical dispenser, a first horizontal dispenser, and a second horizontal dispenser.
Embodiment 11. The coating device according to embodiment 10 further comprising a first y-axis module.
Embodiment 12. The coating device according to embodiment 11 wherein the first vertical dispenser is attached to a first implementation of the first y-axis module; and wherein the second vertical dispenser is attached to a second implementation of the first y-axis module.
Embodiment 13. The coating device according to embodiment 11 wherein the first y-axis module is configured with one or more actuators, motors, and/or gears to provide y-axis movement of the first vertical dispenser and the second vertical dispenser.
Embodiment 14. The coating device according to embodiment 10 further comprising a first z-axis module configured to move the first vertical dispenser and/or the second vertical dispenser up and down along a z axis.
Embodiment 15. The coating device according to embodiment 10 further comprising a second y-axis module.
Embodiment 16. The coating device according to embodiment 15 wherein the first horizontal dispenser is attached to a first implementation of the second y-axis module; and wherein the second horizontal dispenser is attached to a second implementation of the second y-axis module.
Embodiment 17. The coating device according to embodiment 15 wherein the second y-axis module is configured with one or more actuators, motors, and/or gears to provide y-axis movement of the first horizontal dispenser and the second horizontal dispenser.
Embodiment 18. The coating device according to embodiment 10 further comprising an x-axis module configured to move the first horizontal dispenser and/or the second horizontal dispenser up and down along an x-axis.
Embodiment 19. The coating device according to embodiment 10 wherein the at least one support bar comprises a first support bar arranged under the first vertical dispenser and/or the second vertical dispenser; and wherein the at least one support bar comprises a second support bar arranged under the first horizontal dispenser and/or the second horizontal dispenser.
Embodiment 20. The coating device according to embodiment 19 wherein the first vertical dispenser and/or the second vertical dispenser are configured to contact and/or engage a surface of the electrode sheet against the first support bar.
Embodiment 21. The coating device according to embodiment 19 wherein the first horizontal dispenser and/or the second horizontal dispenser are configured contact and/or engage a surface of the electrode sheet against the second support bar.
Embodiment 22. The coating device according to embodiment 19 wherein the at least one roller assembly comprises a first roller assembly, a second roller assembly, a third roller assembly, a fourth roller assembly, and a fifth roller assembly.
Embodiment 23. The coating device according to embodiment 22 wherein the first roller assembly is arranged adjacent the first support bar on one side of the first vertical dispenser and/or the second vertical dispenser.
Embodiment 24. The coating device according to embodiment 22 wherein the second roller assembly is arranged on an opposite side of the first vertical dispenser and/or the second vertical dispenser.
Embodiment 25. The coating device according to embodiment 22 wherein the fifth roller assembly is arranged adjacent the second support bar on one side of the first horizontal dispenser and/or the second horizontal dispenser.
Embodiment 26. The coating device according to embodiment 22 wherein the fourth roller assembly is arranged on opposite side of the first horizontal dispenser and/or the second horizontal dispenser.
Embodiment 27. The coating device according to embodiment 22 wherein one or more of the first roller assembly, the second roller assembly, the third roller assembly, the fourth roller assembly, and the fifth roller assembly are attached to respective brackets and supported by the respective brackets.
Embodiment 28. The coating device according to embodiment 22 wherein the first roller assembly, the second roller assembly, the third roller assembly, the fourth roller assembly, and the fifth roller assembly comprise at least one roller, at least one bearing, at least one support bar, and/or at least one support plate.
Embodiment 29. The coating device according to embodiment 11 wherein the first vertical dispenser, the second vertical dispenser and the first y-axis module are arranged on a bracket.
Embodiment 30. The coating device according to embodiment 29 wherein the bracket is configured to allow movement of the at least one applicator including the first vertical dispenser and the second vertical dispenser along a y-axis.
Embodiment 31. The coating device according to embodiment 15 wherein the first horizontal dispenser, the second horizontal dispenser and the second y-axis module are arranged on a bracket.
Embodiment 32. The coating device according to embodiment 31 wherein the bracket is configured to allow movement of the at least one applicator including the first horizontal dispenser and the second horizontal dispenser along a y-axis.
Embodiment 33. The coating device according to embodiment 15 further comprising at least one sensor configured to detect the glue on the electrode sheet.
Embodiment 34. The coating device according to embodiment 33 wherein an implementation of the at least one sensor is configured to detect application of the glue by the first vertical dispenser; wherein an implementation of the at least one sensor is configured to detect application of the glue by the second vertical dispenser; wherein an implementation of the at least one sensor is configured to detect application of the glue by the first horizontal dispenser; and wherein an implementation of the at least one sensor is configured to detect application of the glue by the second horizontal dispenser.
Embodiment 35. The coating device according to embodiment 33 further comprising a controller configured as part of a closed-loop control system.
Embodiment 36. The coating device according to embodiment 35 wherein the controller is configured to control a first y-axis module in response to the at least one sensor to move the first vertical dispenser and the second vertical dispenser in or out along a y-axis so as to adjust a coating edge distance of the glue on the electrode sheet.
Embodiment 37. The coating device according to embodiment 35 wherein the controller is configured to control the second y-axis module in response to the at least one sensor to move the first horizontal dispenser and the second horizontal dispenser in or out along a y-axis so as to adjust a coating edge distance of the glue on the electrode sheet.
Embodiment 38. The coating device according to embodiment 10 wherein the first horizontal dispenser and the second horizontal dispenser are configured to operate horizontally to apply the glue onto an opposite side of the electrode sheet.
Embodiment 39. The coating device according to embodiment 22 wherein the electrode sheet is received from a slitting machine by the fifth roller assembly; wherein the electrode sheet is guided between the first horizontal dispenser, the second horizontal dispenser, and the second support bar while the first horizontal dispenser and the second horizontal dispenser apply the glue onto a surface of the electrode sheet; wherein the electrode sheet is guided by the fourth roller assembly, the third roller assembly, and the second roller assembly; and wherein the electrode sheet is guided between the first vertical dispenser, the second vertical dispenser, and the first support bar while the first vertical dispenser and the second vertical dispenser apply the glue onto an opposite surface of the electrode sheet.
Embodiment 40. The coating device according to embodiment 1 further comprising a melter to supply the glue to the at least one applicator.
Embodiment 41. The coating device according to embodiment 10 further comprising a melter to supply the glue to the first vertical dispenser, the second vertical dispenser, the first horizontal dispenser, and the second horizontal dispenser.
Embodiment 42. The coating device according to embodiment 1 further comprising a high precision metering pump to ensure a precise delivery of the glue to the at least one applicator.
Embodiment 43. The coating device according to embodiment 10 further comprising one or more snuff-back control modules configured to prevent inadvertent dispensing of the glue from the at least one applicator, the first vertical dispenser, the second vertical dispenser, the first horizontal dispenser, and/or the second horizontal dispenser.
Embodiment 44. A process of implementing a coating device configured to implement an electrode glue coating comprising:
   coating a glue onto two opposite sides of an electrode sheet with at least one applicator;
   guiding the electrode sheet past the at least one applicator with at least one roller assembly; and
   arranging at least one support bar under the at least one applicator.
Embodiment 45. The process of implementing a coating device according to embodiment 44 wherein the at least one applicator comprises a plurality of the at least one applicator.
Embodiment 46. The process of implementing a coating device according to embodiment 44 wherein the at least one applicator comprises a metering slot coating applicator, a VCP metering slot coating applicator, and/or a band coat dispenser.
Embodiment 47. The process of implementing a coating device according to embodiment 44 wherein the coating device is configured to be mounted into a slitting machine and/or adjacent a slitting machine.
Embodiment 48. The process of implementing a coating device according to embodiment 44 wherein the electrode sheet comprises an electrode coil sheet, an electrode aluminum foil sheet, an EV electrode aluminum foil sheet, a thin aluminum sheet, an anode electrode, a cathode electrode, an electrode substrate, and/or an EV battery component.
Embodiment 49. The process of implementing a coating device according to embodiment 44 further comprising detecting the glue on the electrode sheet with at least one sensor.
Embodiment 50. The process of implementing a coating device according to embodiment 44 wherein the at least one applicator is configured to apply the glue on two edges the electrode sheet.
Embodiment 51. The process of implementing a coating device according to embodiment 44 wherein the at least one roller assembly is attached to a bracket and supported by the bracket.
Embodiment 52. The process of implementing a coating device according to embodiment 44 wherein the at least one roller assembly comprises at least one roller, at least one bearing, at least one support bar, and/or at least one support plate.
Embodiment 53. The process of implementing a coating device according to embodiment 44 wherein the at least one applicator comprises a first vertical dispenser, a second vertical dispenser, a first horizontal dispenser, and a second horizontal dispenser.
Embodiment 54. The process of implementing a coating device according to embodiment 53 further comprising implementing a first y-axis module.
Embodiment 55. The process of implementing a coating device according to embodiment 54 wherein the first vertical dispenser is attached to a first implementation of the first y-axis module; and wherein the second vertical dispenser is attached to a second implementation of the first y-axis module.
Embodiment 56. The process of implementing a coating device according to embodiment 54 wherein the first y-axis module is configured with one or more actuators, motors, and/or gears to provide y-axis movement of the first vertical dispenser and the second vertical dispenser.
Embodiment 57. The process of implementing a coating device according to embodiment 53 further comprising implementing a first z-axis module configured to move the first vertical dispenser and/or the second vertical dispenser up and down along a z axis.
Embodiment 58. The process of implementing a coating device according to embodiment 53 further comprising implementing a second y-axis module.
Embodiment 59. The process of implementing a coating device according to embodiment 58 wherein the first horizontal dispenser is attached to a first implementation of the second y-axis module; and wherein the second horizontal dispenser is attached to a second implementation of the second y-axis module.
Embodiment 60. The process of implementing a coating device according to embodiment 58 wherein the second y-axis module is configured with one or more actuators, motors, and/or gears to provide y-axis movement of the first horizontal dispenser and the second horizontal dispenser.
Embodiment 61. The process of implementing a coating device according to embodiment 53 further comprising implementing an x-axis module configured to move the first horizontal dispenser and/or the second horizontal dispenser up and down along an x-axis.
Embodiment 62. The process of implementing a coating device according to embodiment 53 wherein the at least one support bar comprises a first support bar arranged under the first vertical dispenser and/or the second vertical dispenser; and wherein the at least one support bar comprises a second support bar arranged under the first horizontal dispenser and/or the second horizontal dispenser.
Embodiment 63. The process of implementing a coating device according to embodiment 62 wherein the first vertical dispenser and/or the second vertical dispenser are configured to contact and/or engage a surface of the electrode sheet against the first support bar.
Embodiment 64. The process of implementing a coating device according to embodiment 62 wherein the first horizontal dispenser and/or the second horizontal dispenser are configured contact and/or engage a surface of the electrode sheet against the second support bar.
Embodiment 65. The process of implementing a coating device according to embodiment 62 wherein the at least one roller assembly comprises a first roller assembly, a second roller assembly, a third roller assembly, a fourth roller assembly, and a fifth roller assembly.
Embodiment 66. The process of implementing a coating device according to embodiment 65 wherein the first roller assembly is arranged adjacent the first support bar on one side of the first vertical dispenser and/or the second vertical dispenser.
Embodiment 67. The process of implementing a coating device according to embodiment 65 wherein the second roller assembly is arranged on an opposite side of the first vertical dispenser and/or the second vertical dispenser.
Embodiment 68. The process of implementing a coating device according to embodiment 65 wherein the fifth roller assembly is arranged adjacent the second support bar on one side of the first horizontal dispenser and/or the second horizontal dispenser.
Embodiment 69. The process of implementing a coating device according to embodiment 65 wherein the fourth roller assembly is arranged on opposite side of the first horizontal dispenser and/or the second horizontal dispenser.
Embodiment 70. The process of implementing a coating device according to embodiment 65 wherein one or more of the first roller assembly, the second roller assembly, the third roller assembly, the fourth roller assembly, and the fifth roller assembly are attached to respective brackets and supported by the respective brackets.
Embodiment 71. The process of implementing a coating device according to embodiment 65 wherein the first roller assembly, the second roller assembly, the third roller assembly, the fourth roller assembly, and the fifth roller assembly comprise at least one roller, at least one bearing, at least one support bar, and/or at least one support plate.
Embodiment 72. The process of implementing a coating device according to embodiment 54 wherein the first vertical dispenser, the second vertical dispenser and the first y-axis module are arranged on a bracket.
Embodiment 73. The process of implementing a coating device according to embodiment 72 wherein the bracket is configured to allow movement of the at least one applicator including the first vertical dispenser and the second vertical dispenser along a y-axis.
Embodiment 74. The process of implementing a coating device according to embodiment 58 wherein the first horizontal dispenser, the second horizontal dispenser and the second y-axis module are arranged on a bracket.
Embodiment 75. The process of implementing a coating device according to embodiment 74 wherein the bracket is configured to allow movement of the at least one applicator including the first horizontal dispenser and the second horizontal dispenser along a y-axis.
Embodiment 76. The process of implementing a coating device according to embodiment 58 further comprising detecting the glue on the electrode sheet with at least one sensor.
Embodiment 77. The process of implementing a coating device according to embodiment 76 wherein an implementation of the at least one sensor is configured to detect application of the glue by the first vertical dispenser; wherein an implementation of the at least one sensor is configured to detect application of the glue by the second vertical dispenser; wherein an implementation of the at least one sensor is configured to detect application of the glue by the first horizontal dispenser; and wherein an implementation of the at least one sensor is configured to detect application of the glue by the second horizontal dispenser.
Embodiment 78. The process of implementing a coating device according to embodiment 76 further comprising configuring a controller as part of a closed-loop control system.
Embodiment 79. The process of implementing a coating device according to embodiment 78 wherein the controller is configured to control a first y-axis module in response to the at least one sensor to move the first vertical dispenser and the second vertical dispenser in or out along a y-axis so as to adjust a coating edge distance of the glue on the electrode sheet.
Embodiment 80. The process of implementing a coating device according to embodiment 78 wherein the controller is configured to control the second y-axis module in response to the at least one sensor to move the first horizontal dispenser and the second horizontal dispenser in or out along a y-axis so as to adjust a coating edge distance of the glue on the electrode sheet.
Embodiment 81. The process of implementing a coating device according to embodiment 53 wherein the first horizontal dispenser and the second horizontal dispenser are configured to operate horizontally to apply the glue onto an opposite side of the electrode sheet.
Embodiment 82. The process of implementing a coating device according to embodiment 65 wherein the electrode sheet is received from a slitting machine by the fifth roller assembly; wherein the electrode sheet is guided between the first horizontal dispenser, the second horizontal dispenser, and the second support bar while the first horizontal dispenser and the second horizontal dispenser apply the glue onto a surface of the electrode sheet; wherein the electrode sheet is guided by the fourth roller assembly, the third roller assembly, and the second roller assembly; and wherein the electrode sheet is guided between the first vertical dispenser, the second vertical dispenser, and the first support bar while the first vertical dispenser and the second vertical dispenser apply the glue onto an opposite surface of the electrode sheet.
Embodiment 83. The process of implementing a coating device according to embodiment 44 further comprising implementing a melter to supply the glue to the at least one applicator.
Embodiment 84. The process of implementing a coating device according to embodiment 53 further comprising implementing a melter to supply the glue to the first vertical dispenser, the second vertical dispenser, the first horizontal dispenser, and the second horizontal dispenser.
Embodiment 85. The process of implementing a coating device according to embodiment 44 further comprising implementing a high precision metering pump to ensure a precise delivery of the glue to the at least one applicator.
Embodiment 86. The process of implementing a coating device according to embodiment 53 further comprising implementing one or more snuff-back control modules configured to prevent inadvertent dispensing of the glue from the at least one applicator, the first vertical dispenser, the second vertical dispenser, the first horizontal dispenser, and/or the second horizontal dispenser.

## Claims

1. A coating device configured to implement an electrode glue coating comprising:
at least one applicator configured to coat a glue onto two opposite sides of an electrode sheet;
at least one roller assembly configured to guide the electrode sheet past the at least one applicator; and
at least one support bar arranged under the at least one applicator.

2. The coating device according to claim 1 wherein the at least one applicator comprises a plurality of the at least one applicator.

3. The coating device according to claim 1 wherein the at least one applicator comprises a metering slot coating applicator, a VCP metering slot coating applicator, and/or a band coat dispenser, optionally wherein the coating device is configured to be mounted into a slitting machine and/or adjacent a slitting machine.

4. The coating device according to claim 1, wherein the electrode sheet comprises an electrode coil sheet, an electrode aluminum foil sheet, an EV electrode aluminum foil sheet, a thin aluminum sheet, an anode electrode, a cathode electrode, an electrode substrate, and/or an EV battery component.

5. The coating device according to claim 1, further comprising at least one sensor configured to detect the glue on the electrode sheet.

6. The coating device according to claim 1, wherein the at least one applicator is configured to apply the glue on two edges the electrode sheet, optionally wherein the at least one roller assembly is attached to a bracket and supported by the bracket, and optionally wherein the at least one roller assembly comprises at least one roller, at least one bearing, at least one support bar, and/or at least one support plate.

7. The coating device according to claim 1 wherein the at least one applicator comprises a first vertical dispenser, a second vertical dispenser, a first horizontal dispenser, and a second horizontal dispenser.

8. The coating device according to claim 7, further comprising a first y-axis module; optionally
wherein the first vertical dispenser is attached to a first implementation of the first y-axis module; and wherein the second vertical dispenser is attached to a second implementation of the first y-axis module; and optionally wherein the first y-axis module is configured with one or more actuators, motors, and/or gears to provide y-axis movement of the first vertical dispenser and the second vertical dispenser.

9. The coating device according to claim 7 further comprising a first z-axis module configured to move the first vertical dispenser and/or the second vertical dispenser up and down along a z axis; and/or a second y-axis module; optionally wherein the first horizontal dispenser is attached to a first implementation of the second y-axis module; and wherein the second horizontal dispenser is attached to a second implementation of the second y-axis module; and optionally wherein the second y-axis module is configured with one or more actuators, motors, and/or gears to provide y-axis movement of the first horizontal dispenser and the second horizontal dispenser.

10. The coating device according to claim 7 further comprising an x-axis module configured to move the first horizontal dispenser and/or the second horizontal dispenser up and down along an x-axis.

11. The coating device according to claim 7 wherein the at least one support bar comprises a first support bar arranged under the first vertical dispenser and/or the second vertical dispenser; and wherein the at least one support bar comprises a second support bar arranged under the first horizontal dispenser and/or the second horizontal dispenser, optionally wherein the first vertical dispenser and/or the second vertical dispenser are configured to contact and/or engage a surface of the electrode sheet against the first support bar.

12. A process of implementing a coating device configured to implement an electrode glue coating comprising:
coating a glue onto two opposite sides of an electrode sheet with at least one applicator;
guiding the electrode sheet past the at least one applicator with at least one roller assembly; and
arranging at least one support bar under the at least one applicator.

13. The process of implementing a coating device according to claim 12 wherein the at least one applicator comprises a plurality of the at least one applicator.

14. The process of implementing a coating device according to claim 12 wherein the at least one applicator comprises a metering slot coating applicator, a VCP metering slot coating applicator, and/or a band coat dispenser; and/or wherein the coating device is configured to be mounted into a slitting machine and/or adjacent a slitting machine.

15. The process of implementing a coating device according to claim 12 further comprising detecting the glue on the electrode sheet with at least one sensor, optionally further comprising controlling a positioning module in response to detection and/or signals from the at least one sensor to correct a position of the at least one applicator.
